# EUROPEAN PATENT SPECIFICATION

(11) **EP 2 113 550 B1**
(45) Date of publication and mention of the grant of the patent: **12.10.2011**
(21) Application number: 09006076.5
(22) Date of filing: 04.05.2009
(51) Int. Cl.: C09K 19/54

(54) **A composition comprising at least one type of liquid crystal**
Zusammensetzung mit mindestens einer Art von Flüssigkristall
Composition comprenant au moins un type de cristal liquide

(30) Priority: 02.05.2008 EP 08008372
(43) Date of publication of application: 04.11.2009
(73) Proprietor: Sony Corporation, Tokyo 108-0075 (JP)
(72) Inventor: Kilickiran, Pinar, 70327 Stuttgart (DE); Fuhrmann, Gerda, 70327 Stuttgart (DE); Nelles, Gabriele, 70327 Stuttgart (DE)
(74) Representative: Appelt, Christian W.

(56) References cited:
- EP-A- 0 949 287
- EP-A- 1 338 639
- EP-A- 1 541 661
- EP-A- 1 584 617
- EP-A- 1 840 188
- WO-A-2007/049814
- DE-A1- 10 117 224
- DE-A1-102004 012 970
- FR-A- 2 133 788
- US-A- 3 975 285
- US-A- 6 017 465
- US-A1- 2004 164 275
- US-A1- 2005 136 196
- US-A1- 2007 228 326
- FAN YUN-HSING ET AL: "Normal-mode anisotropic liquid-crystal gels" APPLIED PHYSICS LETTERS, AIP, AMERICAN INSTITUTE OF PHYSICS, MELVILLE, NY, US, vol. 82, no. 18, 5 May 2003 (2003-05-05), pages 2945-2947, XP012033912 ISSN: 0003-6951

## Description

The present invention relates to a composition comprising at least one type of liquid crystal, to the liquid crystal cell and liquid crystal display device comprising such composition, to a method of preparing such composition and/or such liquid crystal cell, and to the use of additives in a liquid crystal composition.

Current electronic device display technologies require displays with high brightness and contrast, low power consumption, and very fast response times. The state of the art liquid crystals used in such displays very often do not fulfill all these requirements. Numerous studies have been carried out towards this end wherein either new liquid crystal mixtures were developed or additives, such as inorganic micro- or nano-particles, organic hydrogen-bond or complex forming materials were admixed to the existing liquid crystals to improve their properties (Buchnev et al., 2005, Journal of the SID 13/9, EP 1 213 293, EP 1 038 941, EP 1 197 791 and EP 1 541 661). The additives reported therein do not fulfill all requirements, such as improving the response times without disturbing the contrast ratio, or reducing the switching voltage whilst the response speed is still kept high and the contrast ratio remains unchanged. Another important parameter is the voltage holding ratio of the liquid crystal cells which should be kept high, ideally higher than 95%.

US 6,017,465 A discloses a composition comprising a liquid crystal substance and a non-polymeric organic compound, which compound forms an amorphous phase.

EP 1 840 188 A2 discloses a composition comprising at least one type of liquid crystal and at least one type of non-planar aromatic compound.

US 2004/0164275 A1 discloses cholesteric liquid crystal additives.

EP 1 338 639 A1 discloses a photo-responsive liquid crystal composition comprising a liquid crystalline compound and a gelling agent, which agent has an azobenzene structure, a spiropyran structure, a fulgide structure or a diarylethene structure.

US 2005/0136196 A1 and Fan Yun-Hsing et al. (2003, Applied Physics Letters, 82/18) disclose compositions comprising liquid crystal molecules and a polymerizable compound.

DE 10 2004 012970 A1 discloses a liquid crystal medium based on a mixture of polar compounds with positive dielectric anisotropy.

FR 2 133 788 A discloses liquid crystal compounds.

US 3 975 285 A discloses a composition comprising a liquid crystal material and an additive.

EP 1 584 617 A1 discloses alkylpyridiniumcyanamides and their use as polar aprotic solvents in liquid crystal compositions.

US 2007/0228326 A1 and WO 2007/049814 A1 disclose polymerizable liquid crystal compositions.

DE 101 17 224 A1 discloses a method for stabilizing halogenated aromatic compounds, which method employs specific stabilizing additives.

EP 0 949 287 A2 discloses cholesteric liquid crystal polymers.

It was an object of the present invention to provide for liquid crystal compositions allowing the production of liquid crystal cells wherein the response times are fast, the liquid crystal alignment at the boundary surfaces remain unchanged such that no changes are required in alignment layers, the off transmittance remains same, the contrast ratio and brightness remain high whilst, at the same time, the voltage holding ratios are kept high. It vas also an object of the present invention to provide for a liquid crystal composition allowing the production of liquid crystal cells wherein a high brightness and contrast ratio, i.e. a high on-state transmittance and a low off-state transmittance is maintained.

The objects of the present invention are solved by composition comprising at least one type of liquid crystal and at least one type of additive, wherein said additive
is an organic molecule having a bent shape, said bent shape referring to an arrangement of atoms within a molecule wherein there are at least two longitudinal axes within the molecule, and the longitudinal axes form an angle > 0 degrees and < 180 degrees, and is selected from the group comprising 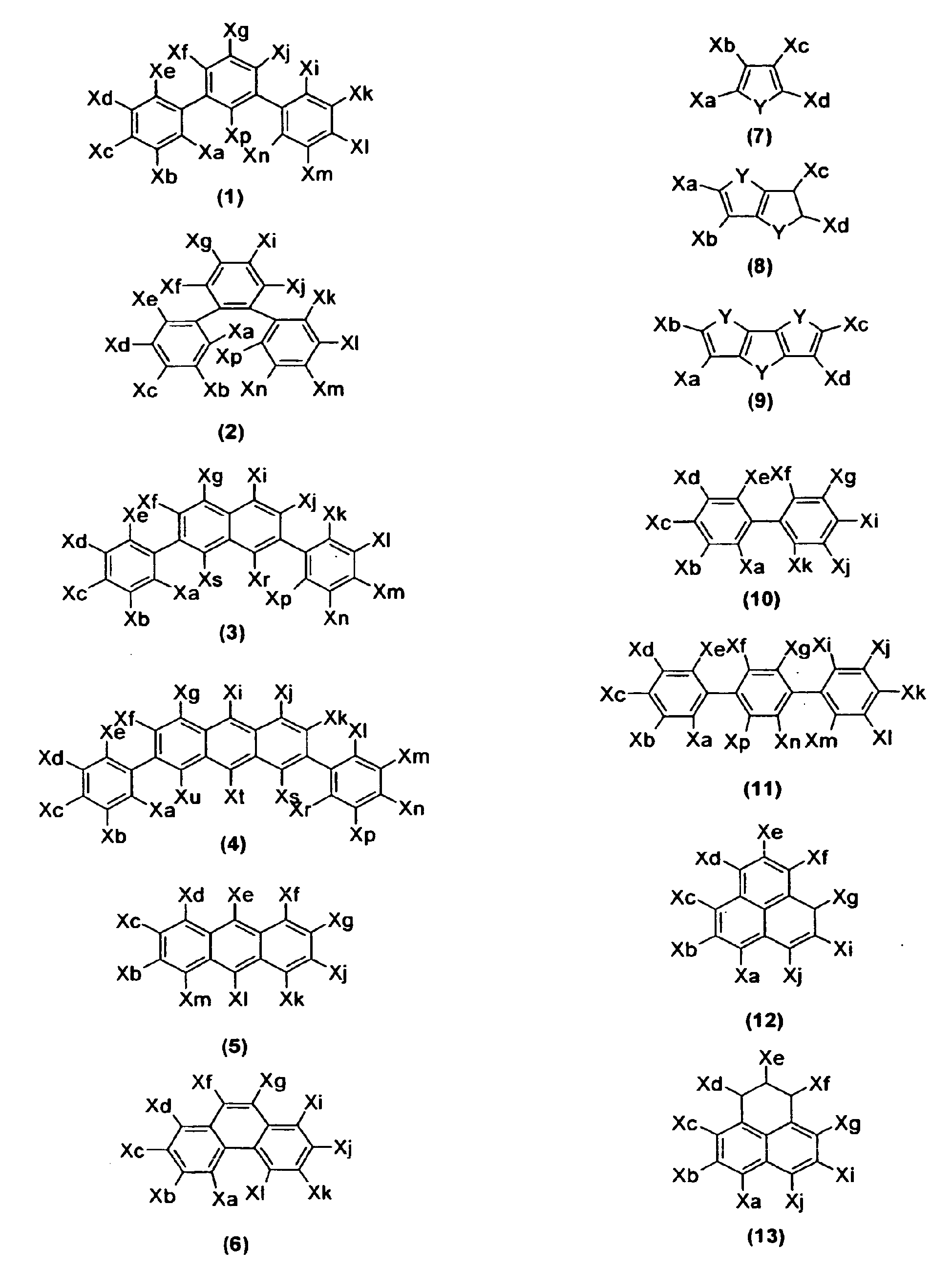 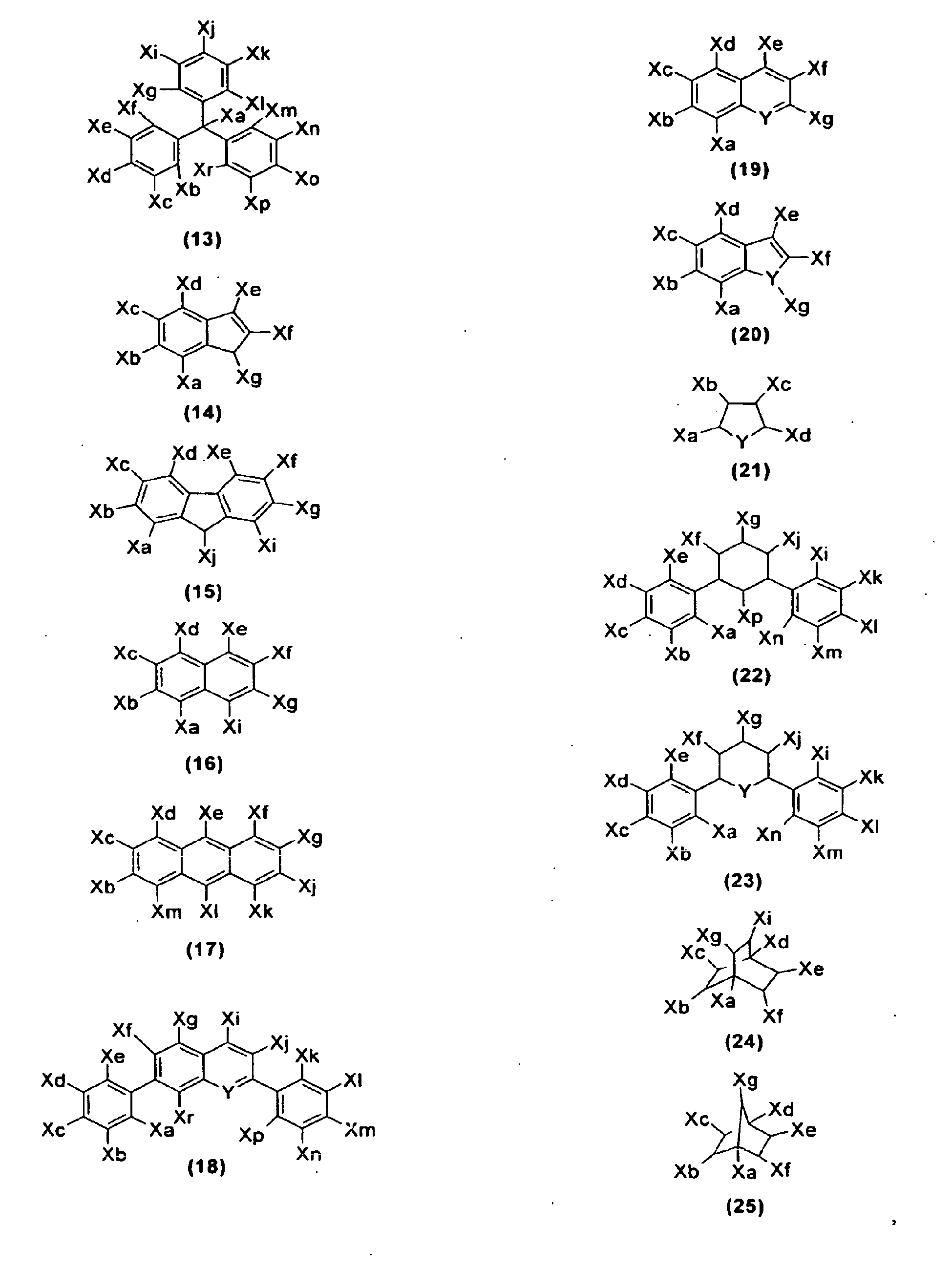 wherein Xa-Xu are independently, at each occurrence, selected from the group comprising H, Cl, F, Br, I, OH, O(CH₂)ₙCH₃, (CH₂)ₙCH₃ wherein n is 0 to 22, preferably 0 to 10, CF₃, OCF₃, CN, NO₂, carboxylic acid, carboxylic acid ester, cyclohexane, phenyl, naphthyl, biphenyl, pyridyl, pyrimidyl, pyridazyl, pyridazilyl triptycyl and 5-membered heteroaromatic groups,
and wherein Y, at each occurrence, is independently selected from the group comprising C, S, NandO. N and O.

In one embodiment when one or more of Xa to Xu is a substituent group selected from O(CH₂)ₙCH₃, (CH₂)ₙCH₃, wherein n is 0 to 22, preferably 0 to 10, cyclohexane, phenyl, naphthyl, biphenyl, pyridyl, pyrimidyl, pyridazyl, pyridazilyl triptycyl and 5-membered heteroaromatic groups, then none, one or more than one of the hydrogen atoms on the aforementioned substituent groups is/are substituted by one or more substituents selected from Cl, F, Br, I, OH, O(CH₂)ₙCH₃, (CH₂)ₙCH₃ wherein n is 0 to 22, preferably 0 to 10, CF₃, OCF₃, CN, NO₂ carboxylic acid and carboxylic acid ester.

In one embodiment the amount of said at least one type of additive is, with respect to the total weight of the composition, 0.1 % (w/w) to 50 % (w/w), preferably 0.1 % (w/w) to 20 % (w/w).

In one embodiment said at least one type of liquid crystal is a liquid crystalline compound or a mixture of liquid crystalline compounds of the negative type.

In another embodiment said at least one type of liquid crystal is a liquid crystalline compound or a mixture of liquid crystalline compounds of the positive type.

In one embodiment said at least one type of liquid crystal is a nematic liquid crystal.

The objects of the present invention are also solved by a liquid crystal cell comprising the composition according to the present invention.

Preferably, the liquid crystal cell according to the present invention comprises a front- and a back-plane, on each or either of said front- and back-plane an electrode or multiplicity of electrodes, on each of said electrodes and/or on said front- and back-plane, a boundary surface consisting of either the electrode and/or the front- and back-plane, or consisting of an additional layer or layers of material on said electrode and/or on said front- and back-plane, and between said boundary surface said composition according to the present invention.

In one embodiment, the liquid crystal cell according to the present invention is a polymer dispersed liquid crystal (PDLC), dichroic polymer dispersed liquid crystal (D-PDLC), sponge-polymer dispersed liquid crystal (SPDLC), dichroic sponge polymer dispersed liquid crystal (D-SPDLC), wherein the composition according to any of claims 1-7 has been used to prepare said cell.

The objects of the present invention are also solved by a liquid crystal display device, comprising the composition according to the present invention or comprising one or a multiplicity of interconnected or separately liquid crystal cells according to the present invention.

The objects of the present invention are also solved by a method of preparing the composition according to the present invention, wherein at least one additive, as defined above, is mixed with at least one type of liquid crystal as defined above.

The objects of the present invention are also solved by a method of preparing the liquid crystal cell according to the present invention, wherein the composition according to the present invention is used to fill a liquid crystal cell or D-SPDLC or SPDLC or D-PDLC or PDLC.

The objects of the present invention are also solved by the use of an additive as defined above for decreasing the response times in a liquid crystal as defined above and/or for providing a re-alignment in a liquid crystal as defined above.

The present inventors have surprisingly found that by using bent shape organic molecules as additives in a liquid crystal composition, it is possible to improve the response times of liquid crystal cells, i.e. making such response times shorter. Without wishing to be bound by any theory, the present inventors believe that doping of a liquid crystal with a bent shape organic compound decreases the rotational viscosity of the liquid crystal which is directly reflected as a reduction in the switching voltages and response times of a liquid crystal cell. An increased degree of angular, i.e. bent shape of the dopant(s) appears to have a positive effect on the response times, i.e. provide for a reduction thereof. The bent shape of the organic compounds as additives or dopants may be influenced by the substitution pattern on such organic compound and the nature of these substituents thereon.

The term "bent shape", as used herein, in connection with an "organic molecule", is meant to refer to an arrangement of atoms within a molecule wherein there are at least two longitudinal axes within the molecule, and the longitudinal axes form an angle > 0 degrees and < 180 degrees.

Aromatic ring systems useful in accordance with the present invention are for example, without being limited thereto, phenyl, naphthyl, biphenyl, binaphthyl, anthracenyl, triptycyl, and heteroaromatic rings having one or several heteroatoms in them (S, O or N) such as pyridyl, pyrimidyl, pyridazyl, pyridinyl, furyl, thienyl.

The term "substituted", as used herein is meant to refer to one or several of the hydrogen atoms present on an aromatic ring system or an aliphatic system being exchanged for another atom or group of atoms. Examples of suitable substituents are, without being limited thereto Cl, F, Br, I, OH, NH₂, -O(CH₂)ₙCH₃, -(CH₂)ₙCH₃, -(CH₂)ₙ-C(O)-(CH₂)₅ CH₃ wherein s = 0 to 22, preferably 0 to 10, and n = 0 to 20 preferably 0 to 10, -CYₘH₃₋ₘ, wherein Y is selected from Cl, F, Br and I, m is from 1 to 3, said one or several substituents being preferably selected from -CF₃, -CN, -NCS, -SCN, -NO₂. -COOH, carboxylic acid ester, cyclohexyl, cyclohexenyl, cyclopentadienyl, cyclopentyl.

The terms "positive type" and "negative type" when used in connection with a liquid crystal compound is meant to refer to the behavior of such a compound in a liquid crystal cell at a particular range of electric field driving frequencies. Liquid crystal compounds of the negative type means that the liquid crystal posses negative dielectric anisotropy at a given range of drive frequencies. They are most commonly orientated in such a manner within a liquid crystal cell when no external field is applied such that they align perpendicular to the boundary surfaces surrounding the liquid crystalline material. This type of alignment is also called homeotropic alignment. Liquid crystal compounds of the positive type means that the liquid crystal posses positive dielectric anisotropy at a given range of drive frequencies. They are most commonly orientated within a liquid crystal cell such that they are aligned parallel to the surrounding boundary surfaces when no external field is applied. This type of alignment is also called homogenous alignment in that the general alignment direction of the liquid crystal is parallel to the surrounding bounding surfaces. There are liquid crystals that can possess both positive and negative dielectric anisotropy depending on the range of drive frequencies. Such liquid crystals are called dual-frequency liquid crystals, and can be used in either homeotropic or homogeneous alignment. Also these types of liquid crystals are meant to be used in the context of the present invention, i.e. in a composition comprising an additive as described above.

The term "response time", as used herein, refers to the time required for a liquid crystal cell to align with a change in applied field. This is usually defined as the time from when the field is changed to the time when the transmission changes by 90% of the overall change. The 90% value is chosen because the gradient of the change in transmission is sufficiently different to zero, which is the not-measurable flat-line case when the transmission has changed fully by 100% of the desired transmission. Turn-on or Rise time is usually taken to be the time taken to respond to an increase in absolute magnitude of an applied field, whereas Turn-off or Fall or Decay time is usually taken to be the time taken to respond to a decrease in absolute magnitude of applied field. This can also be seen from figure 11.

The term "voltage holding ratio", as used herein, is meant to refer to the ratio between the electric charge stored on the cell integrated over a certain time (e.g. 16ms) versus the electric charge stored on an ideal capacitor. It is a measure of the current leakage through the liquid crystal. The voltage holding ratio can be measured by observing the drop in voltage across the cell over a certain time; if a cell holds the voltage at a constant level then the voltage holding ratio is high. High voltage holding ratios equate to low current leakage, high voltage holding ratios are essential for displays with long lifetime and low levels of optical flicker.

The doping may be applicable to other LC modes such as TN, VA, IPS, PDLC (twisted nematic, vertical alignment, in-plane switching, polymer dispersed liquid crystal).

Polymer dispersed liquid crystal cells (PDLCs), dichroic polymer dispersed liquid crystal cells (DPDLCs), sponge polymer dispersed liquid crystal cells (SPDLCs) and dichroic sponge polymer dispersed liquid crystal cells (D-SPDLC) are known to someone skilled in the art and have for example been described in terms of their structure and process of manufacture in EP01129709, EP 02793010 and EP 02791826.

A cell is a unit of a device and a method for confining the liquid crystal mixture such that fields can be applied to the mixture. A display device consists of one or more interconnected or separate cells.

The terms "E10" and "E90" refer to the electric fields applied to the cell for which 10% and 90% of the maximum optical transmission are respectively achieved. The term "V10" and "V90" refer to the respective voltage values at which 10% and 90% of the maximum transmission are achieved, respectively.

The present inventors have surprisingly found that by including in a liquid crystal composition at least one type of bent shape organic compound, it is possible to improve the response times of a liquid crystal cell substantially in comparison to a liquid crystal cell which comprises a liquid crystal composition that does not contain any such bent shape organic compound as an additive (dopant). The addition of such compounds to a liquid crystal composition results in reduce switching voltages and faster response times to applied electrical fields. Without wishing to be bound by any theory, the present inventors believe that the observed fact is due to a reduced viscosity and/or an increased dielectric anisotropy. In their neutral state, rod-like liquid crystal molecules, in particular rod-like nematic liquid crystal molecules, orient themselves parallel to the longitudinal axes of the adjacent molecules. The present inventors have succeeded in improving the switching behaviors of liquid crystals, in particular nematic liquid crystals, by changing their in-bulk organization through the addition of small amounts of bent shape organic compounds, which, preferably, are substituted, such as halogenated. The present inventors believe that such bent shape organic systems penetrate between the liquid crystal molecules, keeping individual molecules slightly apart without disturbing the overall orientation in the mixtures. The present invention therefore decreases liquid crystal response times and increases the switching speeds and also gives a new alignment to the liquid crystals by the addition of the aforementioned additives.

The features of the present invention disclosed in the specification, the claims and/or in the accompanying drawings, may, both separately, and in any combination thereof, be material for realising the invention in various forms thereof.

## Claims

1. A composition comprising at least one type of liquid crystal and at least one type of additive, wherein said additive
is an organic molecule having a bent shape, said bent shape referring to an arrangement of atoms within a molecule wherein there are at least two longitudinal axes within the molecule, and the longitudinal axes form an angle > 0 degrees and < 180 degrees, and
is selected from the group comprising 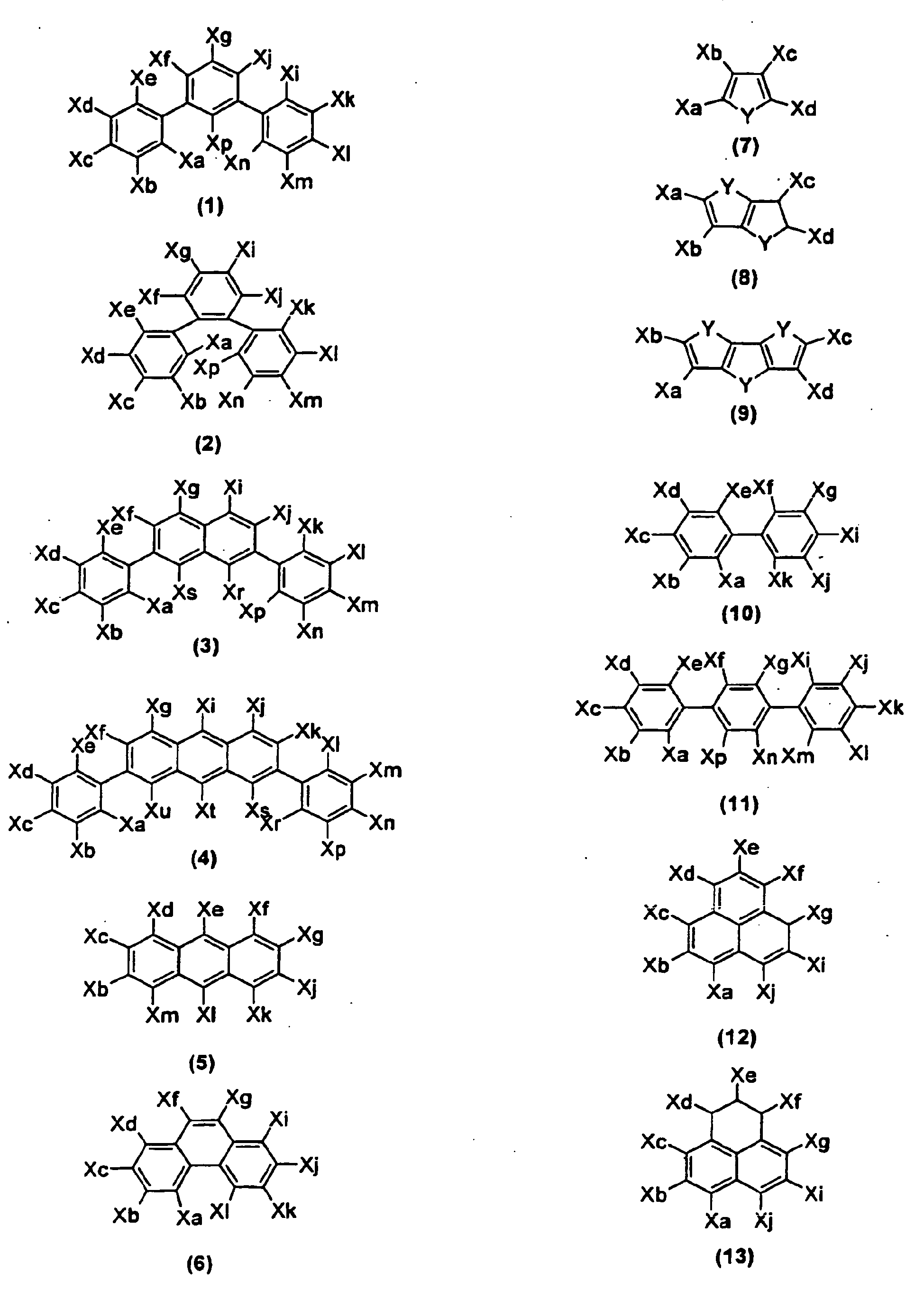 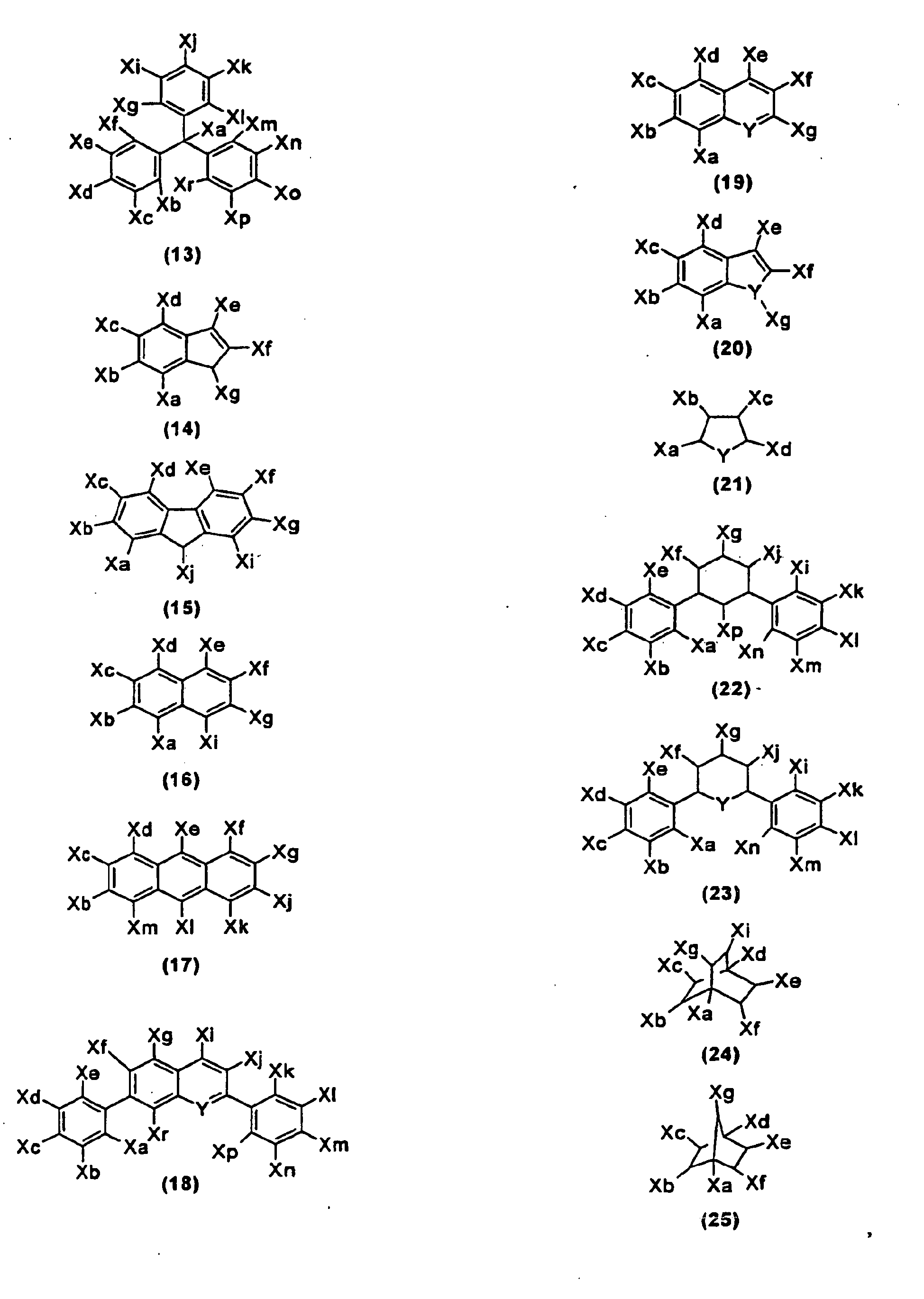 wherein Xa-Xu are independently, at each occurrence, selected from the group comprising H, Cl, F, Br, I, OH, O(CH₂)ₙCH₃, (CH₂)ₙCH₃ wherein n is 0 to 22, preferably 0 to 10, CF₃, OCF₃, CN, NO₂, carboxylic acid, carboxylic acid ester, cyclohexane, phenyl, naphthyl, biphenyl, pyridyl, pyrimidyl, pyridazyl, pyridazilyl triptycyl and 5-membered heteroaromatic groups,
and wherein Y, at each occurrence, is independently selected from the group comprising C, S, N and O.

2. The composition according to claim 1, wherein, when one or more of Xa to Xu is a substituent group selected from O(CH₂)ₙCH₃, (CH₂)ₙCH₃, wherein n is 0 to 22, preferably 0 to 10, cyclohexane, phenyl, naphthyl, biphenyl, pyridyl, pyrimidyl, pyridazyl, pyridazilyl triptycyl and 5-membered heteroaromatic groups, then none, one or more than one of the hydrogen atoms on the aforementioned substituent groups is/are substituted by one or more substituents selected from Cl, F, Br, I, OH, O(CH₂)ₙCH₃, (CH₂)ₙCH₃ wherein n is 0 to 22, preferably 0 to 10, CF₃, OCF₃, CN, NO₂, carboxylic acid and carboxylic acid ester.

3. The composition according to any of the foregoing claims, wherein the amount of said at least one type of additive is, with respect to the total weight of the composition, 0.1% (w/w) to 50 % (w/w), preferably 0.1 % (w/w) to 20 % (w/w).

4. The composition according to any of the foregoing claims, wherein said at least one type of liquid crystal is a liquid crystalline compound or a mixture of liquid crystalline compounds of the negative type.

5. The composition according to any of claims 1-3, wherein said at least one type of liquid crystal is a liquid crystalline compound or a mixture of liquid crystalline compounds of the positive type.

6. The composition according to any of the foregoing claims, wherein said at least one type of liquid crystal is a nematic liquid crystal.

7. A liquid crystal cell comprising the composition according to any of the foregoing claims.

8. The liquid crystal cell according to claim 7, which comprises a front- and a back-plane, on each or either of said front- and back-plane an electrode or multiplicity of electrodes, on each of said electrodes and/or on said front- and back-plane, a boundary surface consisting of either the electrode and/or the front- and back-plane, or consisting of an additional layer or layers of material on said electrode and/or on said front- and back-plane, and between said boundary surface said composition according to any of claims 1-6.

9. The liquid crystal cell according to any of claims 7-8, which is a polymer dispersed liquid crystal (PDLC), dichroic polymer dispersed liquid crystal (D-PDLC), sponge-polymer dispersed liquid crystal (SPDLC), dichroic sponge polymer dispersed liquid crystal (D-SPDLC), wherein the composition according to any of claims 1-6 has been used to prepare said cell.

10. A liquid crystal display device, comprising the composition according to any of claims 1-6, or comprising one or a multiplicity of interconnected or separately liquid crystal cells according to any of claims 7-9.

11. A method of preparing the composition according to any of claims 1-6, wherein at least one additive, as defined in any of claims 1-6, is mixed with at least one type of liquid crystal as defined in any of claims 1-6.

12. A method of preparing the liquid crystal cell according to any of claims 7-9, wherein the composition according to any of claims 1-6 is used to fill a liquid crystal cell or D-SPDLC or SPDLC or D-PDLC or PDLC.

13. Use of an additive as defined in any of claims 1-6 for decreasing the response times in a liquid crystal as defined in any of claims 1-6 and/or for providing a re-alignment in a liquid crystal as defined in any of claims 1-6.

## Patentansprüche

1. Zusammensetzung, umfassend wenigstens einen Typ Flüssigkristall und einen Typ Zusatzstoff, wobei der Zusatzstoff ein organisches Molekül mit einer gebogenen Form ist, wobei die gebogene Form sich auf eine Anordnung von Atomen innerhalb eines Moleküls bezieht, bei der es wenigstens zwei Längsachsen innerhalb des Moleküls gibt und die Längsachsen einen Winkel > 0 Grad und < 180 Grad bilden, und wobei der Zusatzstoff ausgewählt ist aus der Gruppe, umfassend 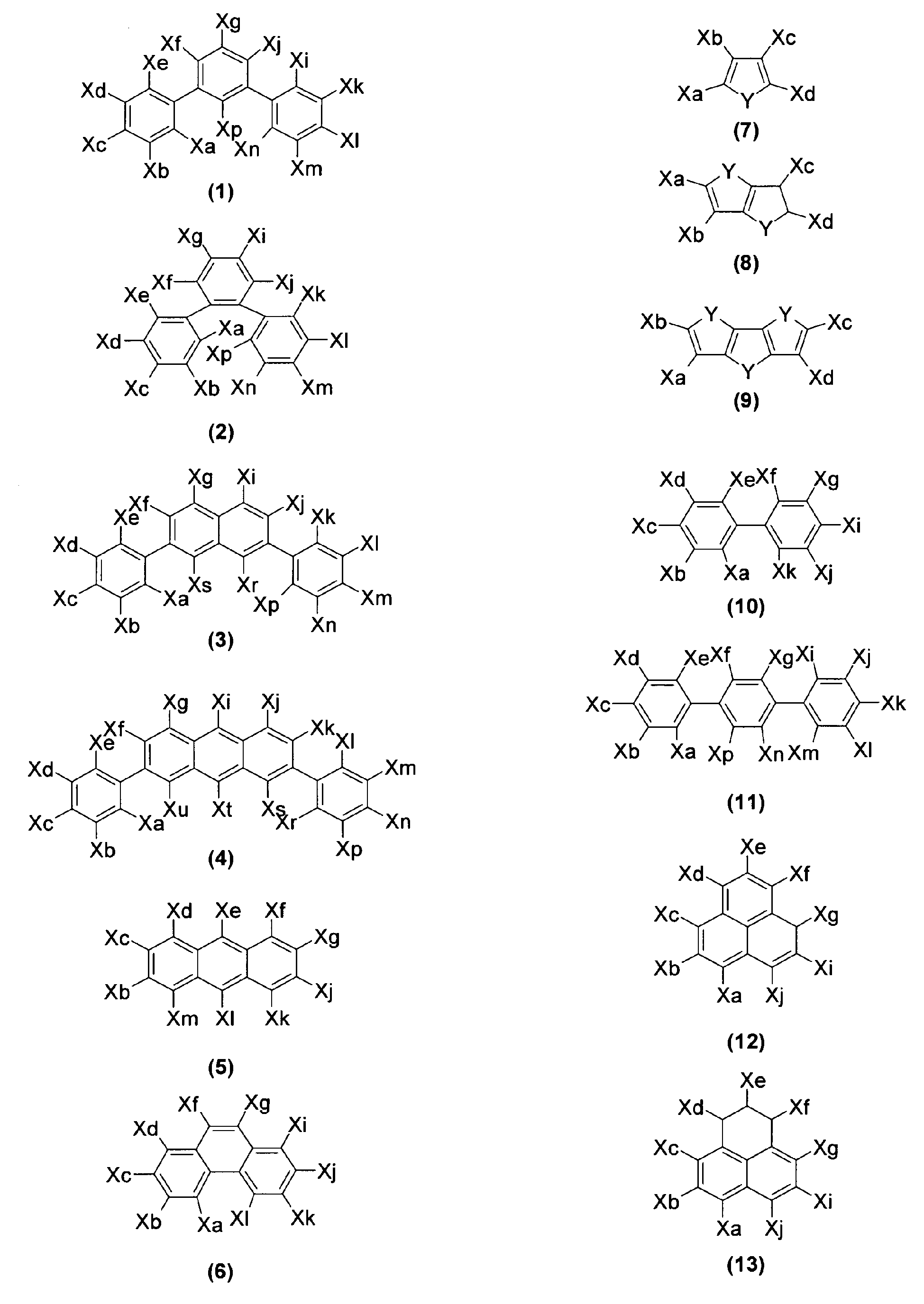 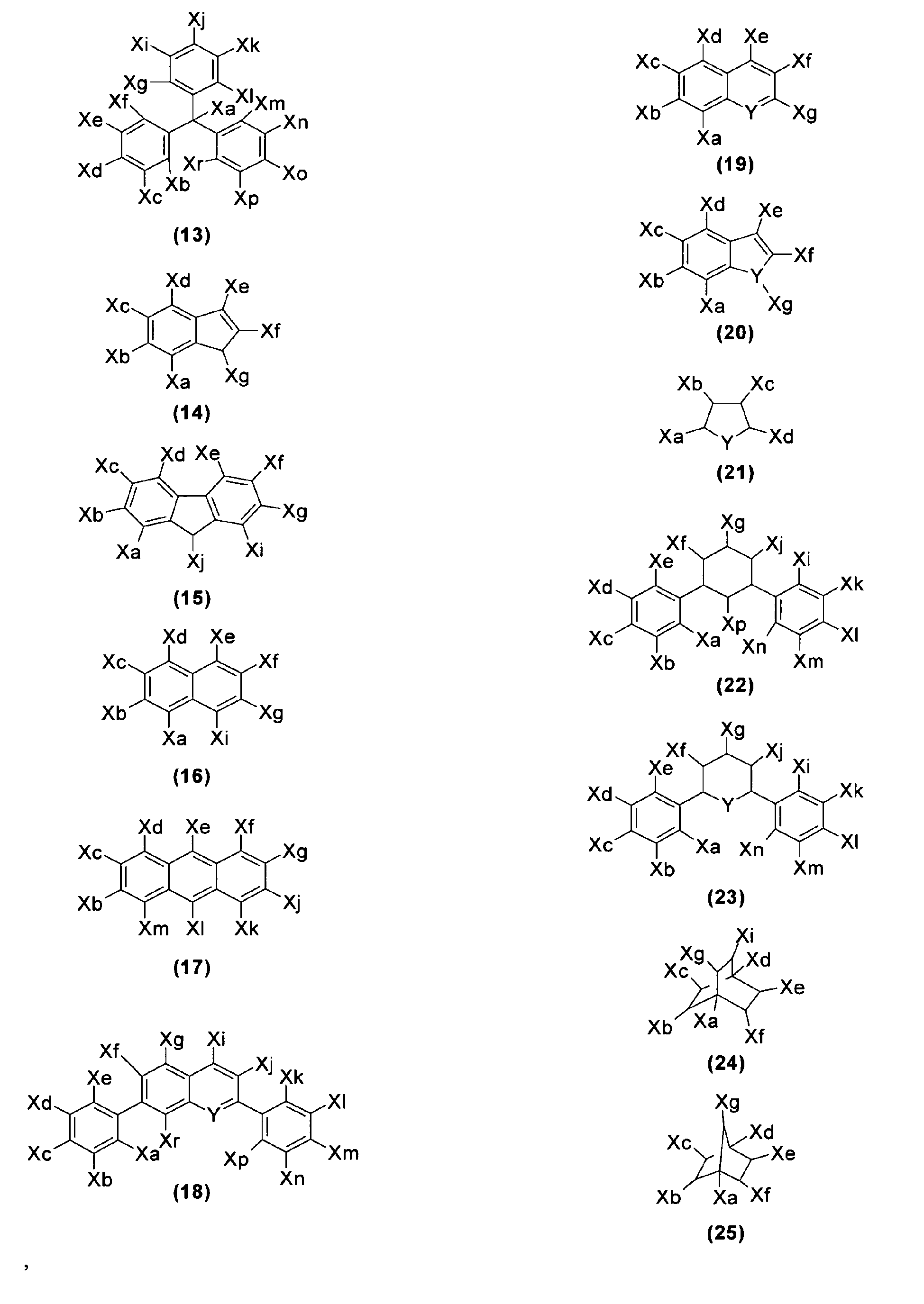 wobei Xa-Xu unabhängig bei jedem Auftreten ausgewählt sind aus der Gruppe, umfassend H, Cl, F, Br, I, OH, O(CH₂)ₙCH₃, (CH₂)ₙCH₃, wobei n 0 bis 22, bevorzugt 0 bis 10 ist, CF₃, OCF₃, CN, NO₂, Carbonsäure, Carbonsäureester, Cyclohexan, Phenyl, Naphthyl, Biphenyl, Pyridyl, Pyrimidyl, Pyridazyl, Pyridazilyl, Triptycyl und 5-gliedrige heteroaromatische Gruppen,
und wobei Y bei jedem Auftreten unabhängig ausgewählt ist aus der Gruppe, bestehend aus, C, S, N und O.

2. Zusammensetzung nach Anspruch 1, wobei, wenn eines oder mehrere von Xa bis Xu eine Substituentengruppe ist, ausgewählt aus O(CH₂)ₙCH₃, (CH₂)ₙCH₃, wobei n 0 bis 22 ist, bevorzugt 0 bis 10, Cyclohexan, Phenyl, Naphthyl, Biphenyl, Pyridyl, Pyrimidyl, Pyridazyl, Pyridazilyl, Triptycyl und 5-gliedrige heteromatische Gruppen, dann ist keines, eines oder mehr als eines der Wasserstoffatome an den zuvor erwähten Substituentengruppen substituiert durch einen oder mehrere Substituenten, ausgewählt aus Cl, F, Br, I, OH, O(CH₂)ₙCH₃, (CH₂)ₙCH₃ wobei n 0 bis 22 ist, bevorzugt 0 bis 10, CF₃, OCF₃, CN, NO₂, Carbonsäure und Carbonsäureester.

3. Zusammensetzung nach einem der vorangehenden Ansprüche, wobei die Menge des wenigstens einen Typs Zusatzstoff 0,1 bis 50% (Gew./Gew.), bevorzugt 0,1 % (Gew./Gew.) bis 20 % (Gew./Gew.) ist, bezogen auf das Gesamtgewicht der Zusammensetzung.

4. Zusammensetzung nach einem der vorangehenden Ansprüche, wobei der wenigstens eine Typ Flüssigkristal eine flüssigkristalline Verbindung oder eine Mischung von flüssigkristallinen Verbindungen des negativen Typs ist.

5. Zusammensetzung nach einem der Ansprüche 1-3, wobei der wenigstens eine Typ flüssigkristalline Verbindung oder eine Mischung von flüssigkristallinen Verbindungen des positiven-Typs ist.

6. Zusammensetzung nach einem der vorangehenden Ansprüche, wobei der wenigstens eine Typ Flüssigkristall ein nematischer Flüssigkristall ist.

7. Flüssigkristallzelle, umfassend die Zusammensetzung nach einem der vorangehenden Ansprüche.

8. Flüssigkristallzelle nach Anspruch 7, die eine Vorder- und eine Rück-Ebene umfasst, auf einer oder beiden der Vorder- und Rück-Ebene eine Elektrode oder eine Vielzahl von Elektroden, auf jeder der Elektroden und/oder auf der Vorder- und der Rück-Ebene eine Grenzfläche, bestehend aus entweder der Elektrode und/oder der Vorder- und der Rück-Ebene, oder bestehend aus einer zusätzlichen Schicht oder Schichten von Material auf der Elektrode und/oder auf der Vorder- und Rück-Ebene und zwischen der Grenzfläche, die Zusammensetzung nach einem der Ansprüche 1-6.

9. Flüssigkristallzelle nach einem der Ansprüche 7-8, die ein Polymer-dispergierter Flüssigkristall (PDLC), dichroischer Polymer-dispergierter Flüssigkristall (D-PDLC), schwamm-dispergierter Flüssigkristall (SPDLC), dichroischer Schwamm-dispergierter Flüssigkristall (D-SPDLC) ist, wobei die Zusammensetzung nach einem der Ansprüche 1-6 dazu verwendet worden ist, um die Zelle herzustellen.

10. Flüssigkristallanzeigevorrichung, umfassend die Zusammensetzung nach einem der Ansprüche 1-6 oder umfassend eine oder eine Vielzahl von untereinander verbundenen oder getrennten Flüssigkristallzellen nach einem der Ansprüche 7-9.

11. Verfahren zum Herstellen der Zusammensetzung nach einem der Ansprüche 1-6, wobei der wenigstens eine Zusatzstoff, wie in einem der Ansprüche 1-6 definiert, mit wenigstens einem Typ Flüssigkristall, wie in einem der Ansprüche 1-6 definiert, gemischt wird.

12. Verfahren zum Herstellen der Flüssigkristallzelle nach einem der Ansprüche 7-9, wobei die Zusammensetzung nach einem der Ansprüche 1-6 dazu verwendet wird, um einer Flüssigkristallzelle oder einer D-SPDLC oder SPDLC oder D-PDLC oder PDLC zu füllen.

13. Verwendung eines Zusatzstoffs, wie nach einem der Ansprüche 1-6 definiert, zum Verringern der Antwortzeiten in einem Flüssigkristall, wie in einem der Ansprüche 1-6 definiert, und/oder zum Bereitstellen eines Re-Alignment in einem Flüssigkristall, wie in einem der Ansprüche 1-6 definiert.

## Revendications

1. Composition comprenant au moins un type de cristal liquide et au moins un type d'additif, dans laquelle ledit additif est une molécule organique présentant une forme pliée, ladite forme pliée faisant référence à une disposition d'atomes dans une molécule dans laquelle il y a au moins deux axes longitudinaux dans la molécule, et les axes longitudinaux forment un angle > 0 degré et < 180 degrés, et est choisi dans le groupe comprenant 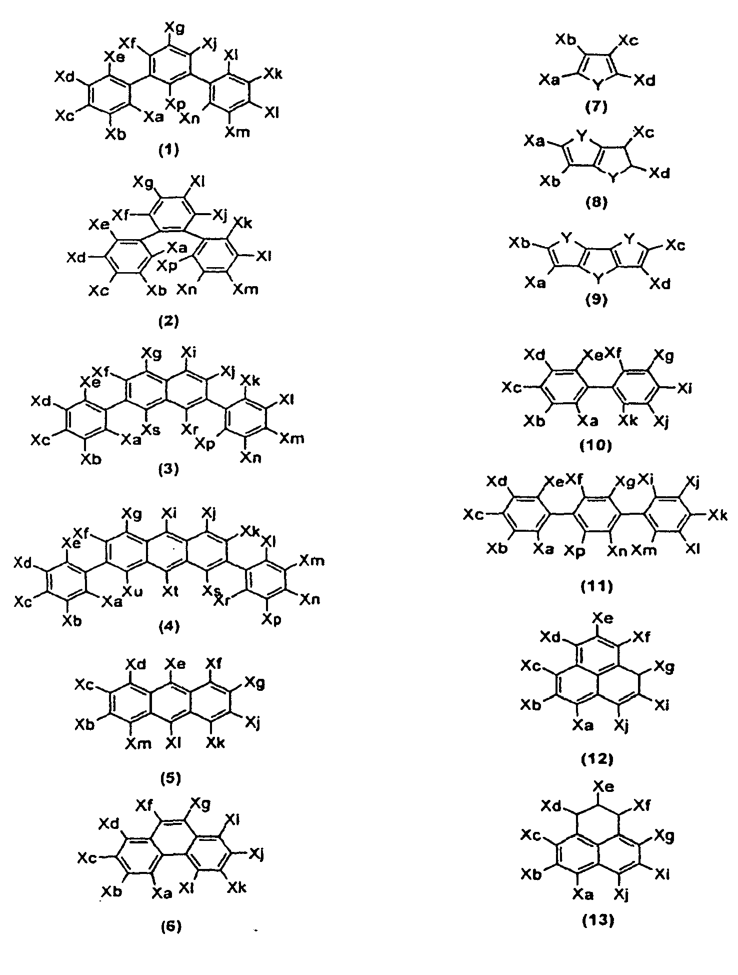 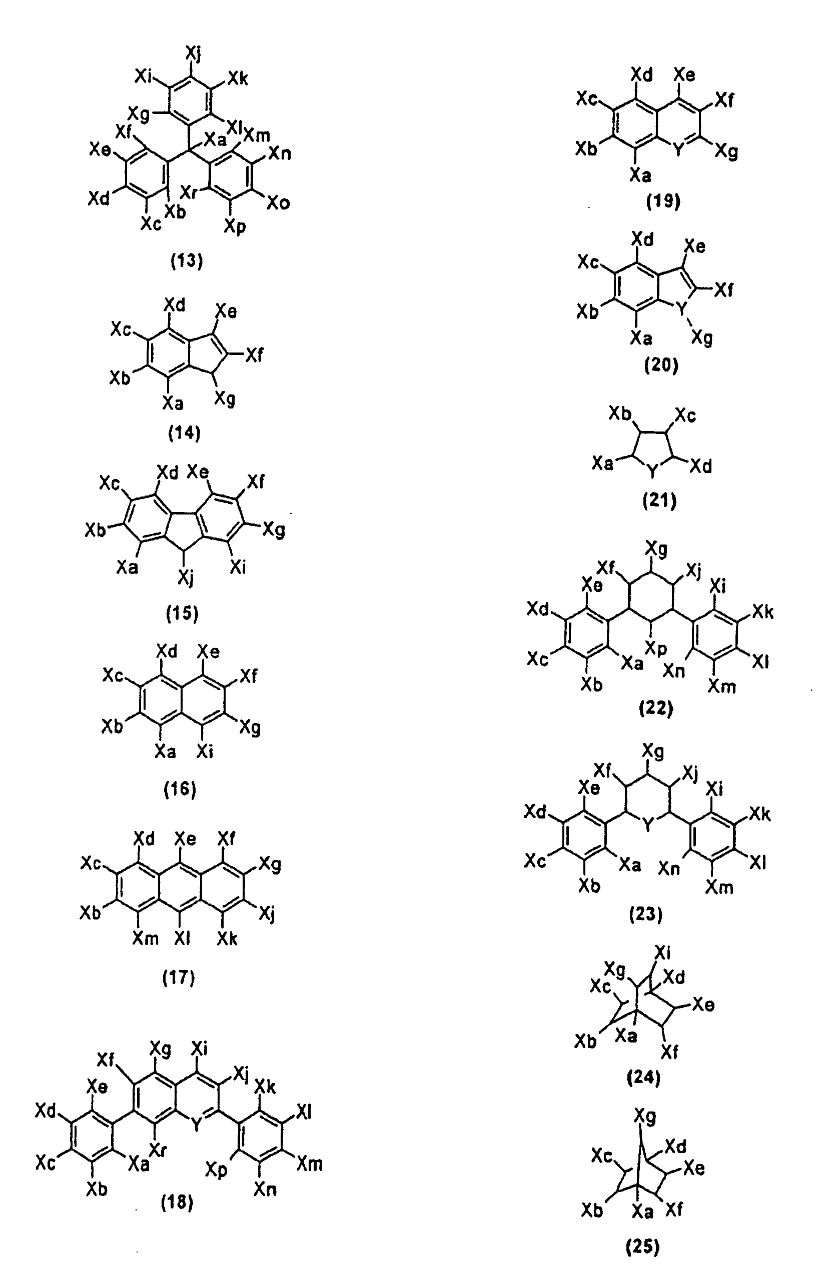 où Xa-Xu sont indépendamment, à chaque apparition, choisi dans le groupe comprenant H, CI, F, Br, I, OH, O(CH₂)ₙCH₃, (CH₂)ₙCH₃, où n est égal à de 0 à 22, de préférence de 0 à 10, CF₃, OCF₃, CN, NO₂, un acide carboxylique, un ester d'acide carboxylique, le cyclohexane, le phényle, le naphtyle, le biphényle, le pyridyle, le pyrimidyle, le pyridazyle, le pyridazilyle, le triptycyle et des groupes hétéroatomiques à 5 éléments,
et où Y, à chaque apparition, est indépendamment choisi dans le groupe comprenant C, S, N et O.

2. Composition selon la revendication 1, dans laquelle, lorsque un ou plusieurs de Xa à Xu est un groupe substituant choisi parmi O(CH₂)ₙCH₃, (CH₂)ₙCH₃, où n est égal à de 0 à 22, de préférence de 0 à 10, le cyclohexane, le phényle, le naphtyle, le biphényle, le pyridyle, le pyrimidyle, le pyridazyle, le pyridazilyle, le triptycyle et des groupes hétéroatomiques à 5 éléments, alors aucun, un ou plus d'un des atomes d'hydrogène sur les groupes substituants cités ci-dessus est/sont substitué(s) par un ou plusieurs substituants choisis parmi CI, F, Br, 1, OH, O(CH₂)ₙCH₃, (CH₂)ₙCH₃, où n est égal à de 0 à 22, de préférence de 0 à 10, CF₃, OCF₃, CN, NO₂ un acide carboxylique et un ester d'acide carboxylique.

3. Composition selon l'une quelconque des revendications précédentes, dans laquelle la quantité dudit au moins un type d'additif est, par rapport à la masse totale de la composition, de 0,1 % (masse/masse) à 50 % (masse/masse), de préférence de 0,1 % (masse/masse) à 20 % (masse/masse).

4. Composition selon l'une quelconque des revendications précédentes, dans laquelle ledit au moins un type de cristal liquide est un composé cristallin liquide ou un mélange de composés cristallins liquides du type négatif.

5. Composition selon l'une quelconque des revendications 1-3, dans laquelle ledit au moins un type de cristal liquide est un composé cristallin liquide ou un mélange de composés cristallins liquides du type positif.

6. Composition selon l'une quelconque des revendications précédentes, dans laquelle ledit au moins un type de cristal liquide est un cristal liquide nématique.

7. Cellule à cristaux liquides comprenant la composition selon l'une quelconque des revendications précédentes.

8. Cellule à cristaux liquides selon la revendication 7, laquelle comprend un plan avant et un arrière, sur chacun ou sur l'un desdits plans avant et arrière une électrode ou une multiplicité d'électrodes, sur chacune desdites électrodes et/ou sur ledit plan avant et arrière, une surface limite constituée soit de l'électrode et/ou du plan avant et arrière, soit constituée d'une couche ou de couches supplémentaires de matière sur ladite électrode et/ou sur ledit plan avant et arrière, et entre ladite surface limite ladite composition selon l'une quelconque des revendications 1-6.

9. Cellule à cristaux liquides selon l'une quelconque des revendications 7-8, laquelle est un cristal liquide dispersé dans un polymère (PDLC), un cristal liquide dispersé dans un polymère dichroïque (D-PDLC), un cristal liquide dispersé dans un polymère alvéolaire (SPDLC), un cristal liquide dispersé dans un polymère alvéolaire dichroïque (D-SPDLC), dans laquelle la composition selon l'une quelconque des revendications 1-6 a été utilisée pour préparer ladite cellule.

10. Dispositif d'affichage à cristaux liquides comprenant la composition selon l'une quelconque des revendications 1-6, ou comprenant une ou une multiplicité de cellules à cristaux liquides interconnectées ou séparées selon l'une quelconque des revendications 7-9.

11. Procédé de préparation de la composition selon l'une quelconque des revendications 1-6, dans lequel au moins un additif, comme défini dans l'une quelconque des revendications 1-6, est mélangé avec au moins un type de cristal liquide comme défini dans l'une quelconque des revendications 1-6.

12. Procédé de préparation de la cellule à cristaux liquides selon l'une quelconque des revendications 7-9, dans lequel la composition selon l'une quelconque des revendications 1-6 est utilisée pour remplir une cellule à cristaux liquides ou un D-SPDLC ou SPDLC ou D-PDLC ou PDLC.

13. Utilisation d'un additif comme défini dans l'une quelconque des revendications 1-6 pour abaisser les temps de réponse dans un cristal liquide comme défini dans l'une quelconque des revendications 1-6 et/ou pour fournir un réalignement dans un cristal liquide comme défini dans l'une quelconque des revendications 1-6.
